# EUROPEAN PATENT SPECIFICATION

(11) **EP 3 794 420 B1**
(45) Date of publication and mention of the grant of the patent: **29.12.2021**
(21) Application number: 19723119.4
(22) Date of filing: 13.05.2019
(51) Int. Cl.: G05B 19/42, B26D 5/00, D06H 7/00

(54) **METHOD AND RELATED NUMERICAL CONTROL EQUIPMENT FOR THE AUTOMATIC CUTTING OF PLIABLE SHEETS, FOR EXAMPLE FOR SHOE, LEATHER, CLOTHING COMPONENTS AND THE LIKE**
VERFAHREN UND ZUGEHÖRIGE NUMERISCHE STEUEREINRICHTUNG ZUM AUTOMATISCHEN SCHNEIDEN VON BIEGSAMEN PLATTEN, ZUM BEISPIEL FÜR SCHUHE, LEDER, BEKLEIDUNGSTEILE UND DERGLEICHEN
PROCÉDÉ ET ÉQUIPEMENT DE COMMANDE NUMÉRIQUE ASSOCIÉ POUR LA DÉCOUPE AUTOMATIQUE DE FEUILLES PLIABLES, PAR EXEMPLE POUR CHAUSSURES, CUIRS, COMPOSANTS DE VÊTEMENTS ET SIMILAIRES

(30) Priority: 14.05.2018 EP 18172165
(43) Date of publication of application: 24.03.2021
(73) Proprietor: Comelz S.p.A., 27029 Vigevano (IT)
(72) Inventor: CORSICO PICCOLINO, Alessandro, 27029 Vigevano (PV) (IT)
(74) Representative: Botti, Mario
(86) International application number: PCT/EP2019/062195
(87) International publication number: WO 2019/219598

(56) References cited:
- WO-A1-2017/083344
- CN-A- 1 986 835
- US-B2- 9 635 908

## Description

### Field of application

The present invention relates to a method and to a related numerical control machine for the automatic cutting of sheets of pliable material, for example for shoe, leather, clothing, automotive, furnishing components and the like, not necessarily made of leather.

More particularly, but not exclusively, the invention relates to the automatic cutting and/or trimming of sheets for shoe uppers or for leather items, and the following description is made with reference to this application field with the only purpose of simplifying the exposition.

### Prior art

As it is well-known in this specific technical field, the automated cutting of sheets of pliable and flexible material, such as uppers for shoes or parts thereof, is particularly complex both because of the structure itself of the material and because of the need to cut the amount strictly needed for the subsequent processing.

During the last few years, in addition to the problem of reducing to a minimum the machining waste, there is also the problem of cutting out portions of the sheet which can have variations in colour, different shades, mouldings or thicker areas of material which create colour effects that are to be found on the finished article.

As already mentioned, the sheets of pliable material are not necessarily made of leather, but may be made of fabric, with a reinforcement between weft and warp creating iridescent effects (which characterizes for example highly engineered materials), or made of non-woven fabric, or also of a synthetic/plastic material, also of the multi-layer type, on which logo application or stamping operations have been previously carried out.

In the present specification the term "sheets" means any element having any form and having a substantially two-dimensional size, namely with a particularly small thickness, which must be cut in order to cut out a portion which must undergo further processing operations that could also require further cutting.

Essentially, the most current problem is that of precisely marking out or cutting portions of the pliable sheet comprising predetermined images, logos or chromatic and/or iridescent effects which must be eventually found in predetermined positions on the finished product.

The prior art already proposes a number of solutions for attempting to satisfy the aforementioned requirements.

For example, the known apparatuses which are currently present on the market use a number of peripheral references incorporated in the sheet itself or the so-called markers present on the surface of the semi-finished sheet, so as to have a number of spatial references on the basis of which the profile of the shapes to be cut may be more precisely calculated. According to this solution, however, it is not possible to process in an optimum manner the new types of sheet-like materials having shapes which are not well-defined owing to colour shades and/or weft weaves in the fabric, which make it difficult to recognize each shape, in particular during trimming. In particular, the markers cannot be arranged in visible positions and therefore they do not allow a precise alignment with internal elements.

A more modern solution is disclosed in the US patent n. US 9,635,908 B2 to Chang, which relates to a system and a method for trimming materials in the form of sheets which tend to fold. In particular, this document deals with the problem of achieving a sufficient degree of correspondence with a reference shape during the cutting of sheet portions which must then undergo subsequent processing operations.

In fact, it is widely known that the automated processing of pliable components for a shoe or for another type of item may be very difficult owing to the stacking of the sheets, to the complicated nature of many modern shoe uppers, as well as to the small manufacturing tolerances involved, which all may result in a deviation or deterioration of the shape of the single cut component, which may result in a final product which is unattractive or which may even make the final assembly thereof impossible.

The solution described in the aforementioned US patent provides the presence of: an image capturing device for capturing an image of a flexible article; a processing system provided with a memory to compare the captured image with a representation of a shape stored in the memory, so as to allow the identification of at least one critical feature which is expected to be found in the captured image of the pliable article, and means for generating a cutting path which reduces to a minimum the geometrical differences between the detected image and the shape stored in the memory.

The processing system, once a proposed cutting path has been generated, compares this cutting path with distance tolerances associated with one or more of the critical features of the reference shape contained in the memory, and consequently adjusts the final cutting path, attempting to remain within the predefined tolerances. Document CN 1 986 835 also discloses another method for automatically cutting sheets of pliable material.

While advantageous in various respects and substantially achieving the object, the above solution proposed by the prior art discloses a very generic embodiment and does not provide specific information about the method of identifying the critical characteristics to be aligned.

The technical problem of the present invention is to provide a method and a related numerical control machine for automatically cutting sheets of pliable and/or flexible material, which have respective functional and structural characteristics such as to allow precise cutting out of sheet portions according to qualitative and appearance criteria of the sheet surface.

A further object of the invention is that of ensuring a particularly efficient trimming of a sheet portion which has already undergone a first cutting step, without the need for particular attention as regards positioning of the sheet on the working surface.

Another object of the invention is that of providing a method and related equipment of the type mentioned above and able to identify variations in the qualitative aspects and composition of the sheet material, or variations in the appearance and look of the surface thereof prior to the definition of the shape to be cut out.

### Summary of the invention

The solution idea at the basis of the present invention is to perform a so-called first cut in the sheet of pliable material according to a cutting instruction obtained from an on-line comparison of a captured image of the sheet to be cut with a reference image, these images being filtered according to a criterion which relates not only to the shape of the portion to be cut but also to the appearance and superficial look of said sheet, wherein said appearance and/or look are due to a structural composition of the sheet of pliable material or to a surface treatment which it has undergone.

On the basis of this solution idea, a first embodiment of the invention discloses a method for automatically cutting sheets (2) of pliable material, for example for shoe, leather, clothing components and the like, of the type wherein a numerical control machine, provided with an electronic control system having a memory comprising at least one reference image of the shape of the component to be cut, is designed to receive at its inlet material in the form of sheets so as to define on said sheets a processing path or point and to transfer cut portions to its outlet,
the method comprising a setting step including:
   - storing in the memory at least one second reference image of the surface of the sheet or of the portion to be cut;
   - defining by means of selection, via a user interface of the electronic control system, at least one first sample portion and at least one second sample portion of said at least one second reference image, said sample portions representing opposite classification examples, relating to a respective qualitative aspect of the surface of the sheet; and
   - obtaining a classification criterion based on said opposite classification examples provided by the first sample portion and the second sample portion of the image;
said method comprising a process step including:
   - acquiring at least one image of the sheet to be cut, by means of image detectors associated with the machine;
   - classifying pixels of the acquired image of the sheet to be cut, assigning thereto a percentage value or weight according to said classification criterion, by means of an image processing unit of said electronic control system, obtaining a filtered image based on said criterion,
wherein assigning to the pixels a percentage value or weight for obtaining a filtered image comprises assigning to each pixel of said acquired image a colour category, each colour category being defined based on said classification criterion; and
   - further processing the filtered image and the reference image of the shape of the component to be cut, so as to define the processing path or point of a cutting area of the portion of the sheet,
wherein the definition of the processing path or point of the cutting area during the process step involves a comparison between said acquired image and the reference image of the shape of the portion to be cut, in order to establish and check the alignment degree of the cutting area with the reference image of the shape, with reference to a predefined reference system.

Advantageously, the above criterion for comparative classification of the setting step involves the implementation of an automatic learning procedure in said processing unit by using a neural network.

It is observed that the filtering step is applied also to the so-called first cut which is carried out on a sheet of a material wound in the form of rolls.

Moreover, the classification step comprises highlighting areas having minimum relative differences and/or highlighting low contrast areas, and/or comprises ignoring image portions whose position is irrelevant for the subsequent processing.

More in particular, during the process step, the definition of the processing path or point of the cutting area involves a comparison between said acquired digital image and the reference image of the shape of the portion to be cut, in order to establish and check the alignment degree of said cutting area with said reference image of the shape, with reference to a predefined reference system.

It is also provided the identification of so-called critical areas of said cutting area of said image, the step of checking the alignment of the cutting profile comprising also a step of aligning said critical areas with corresponding critical areas in said reference image of the shape by means of a roto-translation of the respective reference coordinates.

The above alignment degree is established by globally comparing the value of the pixels of the acquired digital image with those of the reference image of the shape and verifying if the relative difference of the values of said pixels s above or below an acceptance threshold value.

In other words, the value of the pixels of the acquired image is compared with an expected value thereof with respect to a predefined reference system, by assigning to each pixel an association value, and a step of checking whether said association value is above or below the acceptance threshold value is performed.

The above roto-translation is performed by minimizing the relative difference between the values of said pixels, said minimization being performed globally on all the pixels or only on specific portions of the image.

In the process step, the method further comprises a step of rectifying deformations of the cutting area by means of fine adjustment of said cutting processing path or point, this fine adjustment being performed by dividing said cutting area into a predefined pattern and locally rectifying in a selective manner portions of said pattern, while adjusting the remaining portions of said pattern as little as possible, so as not to deform sheet portions which do not require rectification.

The predefined pattern is a polygonal grid comprising a plurality of adjacent polygons.

Moreover, the setting step includes a further step of manual preemptive alignment, wherein the user manually aligns cutting areas with an ideal reference image.

The present invention also relates to a system for automatically cutting sheets of pliable material, for example for shoe, leather, clothing components and the like, of the type wherein a numerical control machine, provided with an electronic control system having a memory comprising at least one reference image of the shape of the component to be cut, is designed to receive at its inlet material in the form of sheets so as to define on said sheets a cutting perimeter or trimming and to transfer cut portions to its outlet, characterized in that it is adapted to automatically carry out the steps of the method according to the invention.

The invention also relates to a computer program product for controlling a numerical control machine for automatically cutting sheets of pliable material, said computer program product comprising code portions adapted to control the machine according to the method according to the method of the present invention.

The features and advantages of the method and of the system according to the invention will become apparent from the following description of an embodiment thereof, given by way of non-limiting example with reference to the accompanying drawings. It is also pointed out that these drawings are purely indicative illustrations which do not make explicit reference to any commercially known model. The invention is defined by the appended claims 1 to 16.

### Brief description of the drawings

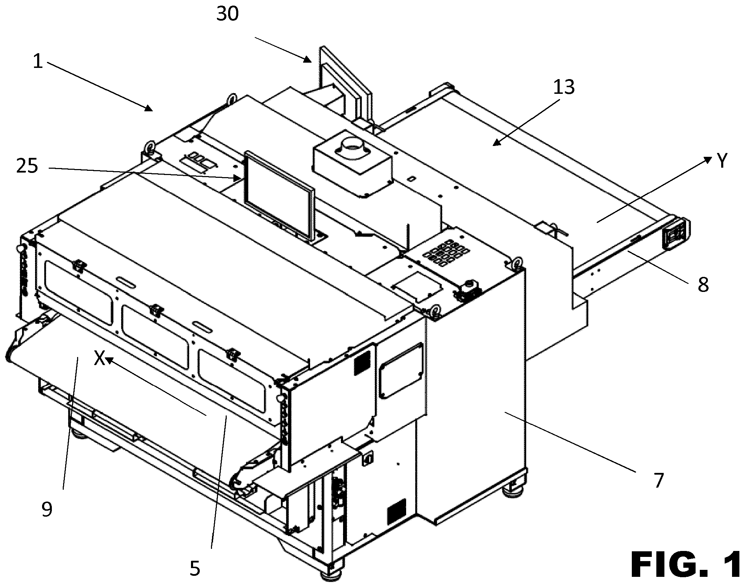

Figure 1 shows a perspective and schematic view of an equipment according to the present invention for the automatic cutting of sheets of pliable material, such as shoe uppers and/or leather items;
Figure 2 is a block diagram schematically illustrating an electronic control system incorporated in the equipment of Figure 1;
Figure 3 is a perspective photographic view of the equipment of Figure 1 during the operation thereof;
Figure 4 shows a schematic view of a further example of the equipment according to the invention, which is fed with loose sheets of pliable material, for example sheets obtained from a previous first cutting operation performed for example with the equipment of Figure 2;
Figure 5 shows on a larger scale an example of a qualitative reference image present in the memory of the control system of Figure 2 and relating to a surface appearance of a sheet to be processed by means of the equipment according to the invention;
Figure 6 shows on a larger scale and with a greater chromatic contrast an image reconstructed by means of a filtering treatment carried out on a digital image of a sheet portion based on the reference image shown in Figure 5 according to the method of the present invention;
Figure 7 shows a schematic view of a series of digital images acquired from sheets processed by the equipment according to the invention and recorded by means of the control system of Figure 2;
Figure 8 shows a further schematic view of the images shown in Figure 7 following a filtering treatment carried out according to the method of the present invention;

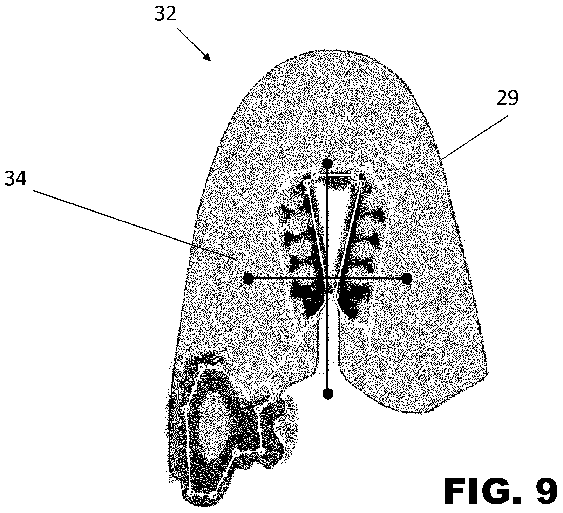

Figure 9 shows a schematic view of an image presented to the user of the equipment during the setting step;
Figures 10 and 11 show respective schematic views which show a simple writing present on a sheet processed by the equipment according to the invention in its real form (figure 10) and aligned with a reference system (figure 11) during a manual alignment step;
Figure 12 shows the superimposed arrangement of the acquired image and the reference image following the automatic alignment step, with the superimposition of a polygonal grid.
Figures 13-16 show respective schematic views illustrating the definition of image processing manners;
Figures 17-19 show flow diagrams which illustrate the filtering step, the preemptive processing alignment, and the process step.

### Detailed description

With reference to those figures, an equipment according to the present invention is globally and schematically indicated with 1, this equipment being designed for the processing, and in particular for the automatic cutting, of sheets 2 of pliable or flexible material, such as shoe uppers and/or leather, clothing, automotive, furnishing items, and the like. The cutting step involves at least a step of first cutting of at least one portion 3 of the sheet 2, or also a step of trimming of the same portion 3 which has already undergone a previous cutting step.

The application to leather articles is only indicative and must not be regarded as limiting the rights of the Applicant. The invention is in fact applicable also to clothing articles or accessories which are made of fabric or non-woven fabric or also of synthetic plastic material.

The invention is applicable preferably to sheets 2 of material in the form of rolls 4; however, as already mentioned in the preamble of the present specification, the term "sheets 2" indicates any element of any shape and with a substantially two-dimensional size, namely having a particularly small thickness, which has to be cut in order to cut out a portion 3 that undergoes subsequent processing operations, which as already mentioned could also include a further trimming operation.

It should also be considered that, in case the aforementioned sheets 2 of pliable material were made of fabric, they could have a reinforcement between weft and warp which produces iridescent surface effects or could have openwork parts or parts with lacework. Moreover, if the sheets 2 comprised non-woven fabric or synthetic/plastic material, they could also be multi-layer and/or could have been treated beforehand by means of logo application or stamping operations which impart designs, profiles or colour shades to the surface of the sheet 2.

In any case, the invention is applicable in particular to sheets of pliable material which have a surface appearance and/or look due to a structural composition of the sheet itself or to a surface treatment previously carried out thereon.

It should also be noted that normally, after a so-called first cut, a number of off-line operations can be carried out immediately on the portion 3 of the sheet 2 which has already undergone the first cut.

These operations may involve the application, also by means of gluing, of parts or logos formed on support media which are more rigid than the material of the starting sheet 2. This may result in a thickening of the portion 3 in some of its parts and to an associated greater rigidity of these parts than that of the flexible starting sheet, which in any case modifies the surface appearance thereof.

The invention also relates to these aspects and offers a solution for managing in an optimum manner also already cut portions 3 of the sheet 2 which require a further trimming.

For example, the parts of the portion 3 which have thicker zones which make the structure more rigid are advantageously precisely cut using a reference shape. On the other hand, other more flexible material parts are cut while respecting the aesthetic appearance or the design reproduced on their surface, otherwise it will not be possible to produce the final article. This means that the equipment according to the invention is able to apply a variable cutting criterion also to a same portion 3.

In this context, the invention differs from the prior art in that it has a by far improved system for the capture and initial processing of the image of the portion 3 of the sheet 2 associated with the product component to be formed.

The equipment 1 is a numerical control machine 7 provided with an electronic control system 20 having data memories 21 and program memories 22. The data memories 21 are used to store reference images relating to reference sample shapes of the portions 3 of sheet 2 to be cut, different shapes being provided for each different processing. Depending on the sheet to be cut, the suitable reference shape which has been stored is therefore selected.

The program memories contain application programs which allow the implementation of the method according to the present invention in the manner described below.

More particularly, the numerical control machine 7 has an inlet 5 through which at least one sheet 2 of pliable or flexible material, for example a sheet in roll form 4, or at least one portion 3 of a sheet 2 which has already undergone a first cut, is fed. The cut portions 3 of the sheet 2 are recovered at the outlet 13 of the machine 7.

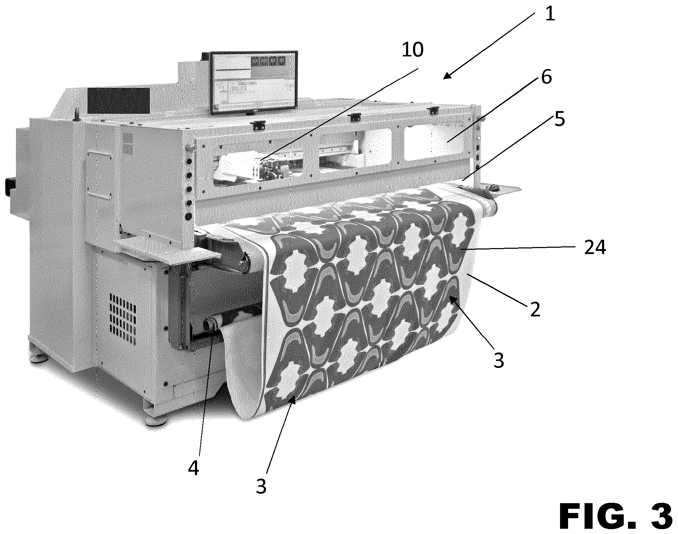

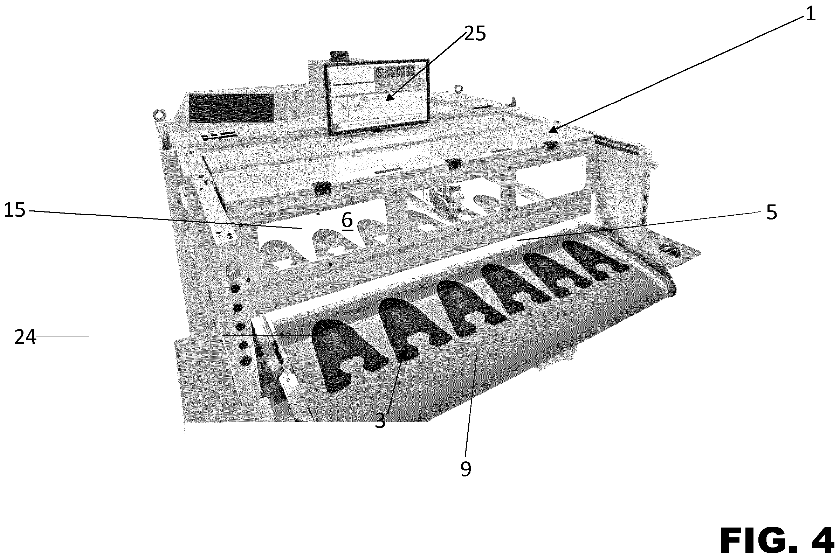

As shown in Figure 3, the sheet 2 may be a material wound in the form of rolls 4 or, as shown in Figure 4, may be a loose portion 3 loaded and arranged onto a conveyor belt 8.

The conveyor belt 8 is covered by a breathable sacrificial support layer 9 which undergoes several cutting steps during the automatic processing of the sheet 2 and which is periodically replaced in order to rectify its deterioration. Underneath the support layer 9 conventional suction means are provided in order to keep the sheet 2 in position on the conveyor belt 8 during feeding.

The inlet 5 of the machine 7 provides access to a compartment 6 passed through by the conveyor belt 8 and provided at its top with a plurality of cameras 10 apt to acquire images 12 of the sheet 2 or the portions 3 of the sheet 2.

The cameras 10 are arranged in the form of a grid or matrix so as to cover for example a rectangular surface 15 which spans and corresponds substantially to the perimetral dimension of the compartment 6 or, in other words, to the section of the conveyor belt 8 contained inside the compartment 6.

In a preferred embodiment, at least fifteen cameras 10 are arranged according to a matrix formed by three cameras 10 in one direction (which will be called "Y" and is the traveling direction of the conveyor belt 8) and by five cameras 10 arranged in a direction X, transverse to the direction Y.

Obviously, the person skilled in the art will understand that a different number or arrangement of the cameras 10 may be provided.

What is important for the purposes of the invention is that the entire area of the rectangular surface 15 is covered by cameras 10 which are intended to record digital images representing the form and the pattern on the sheet 2.

Each camera 10 is digital, for example a CCD camera, and incorporates internally a processor which converts and makes immediately available an image data file in a format which can be processed by the electronic control system 20 of the machine 7, for example a JPEG or similar format.

The machine is provided with cutting means which are not limited to a particular type and the cut can be performed by means of a blade, laser, water jet or in any other suitable way.

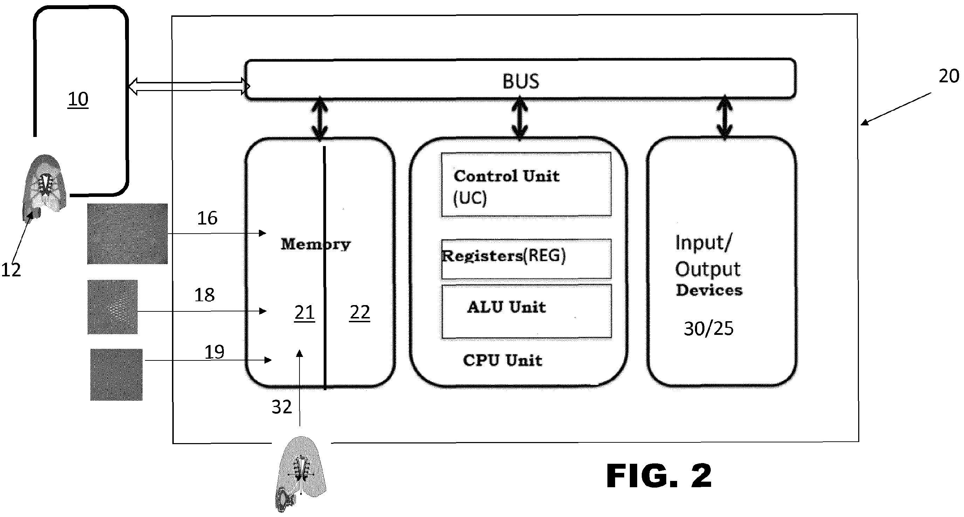

In an example embodiment of the present invention, the electronic control system 20 of the machine 7 is shown schematically in Figure 2 and comprises a CPU unit and an ALU unit with the respective data memory 21 and program memory 22 which can be both volatile and non-volatile and which are interconnected with the CPU unit by means of a conventional data, address and control bus.

The program memories 22 contain a computer program which is adapted to implement the method of the present invention according to a predetermined sequence of operating steps of the completely automated type. The electronic system 20 is also equipped with a display 25 which allows a user to view the operating steps of the method according to the present invention. The user also has the possibility of interacting with the control system 20 in order to start, stop or control the execution of the computer program by means of a control panel 30. The display 25 and the control panel form the user interfaces 30 of the system 20.

In particular, the present invention provides a first setting step which in turn comprises a filtering step in which an image filtering system is provided.

The filtering step possible thanks to a prior set-up of the machine 7 which is trained in the initial setting step in order to classify portions 18 or at least a first portion 18 of the digital image which the user does not wish to have processed or which is not to be taken into account during a subsequent cutting step.

Similarly, the user has available a selection means, in particular a program instruction, which allows to identify and select portions 19 or at least one second portion 19 of the digital image which the user wishes to be taken into account by the control system 20 in order to correctly identify the processing profile or perimeter or path or point of a cutting area 34 (or also of portions of the cutting area 34) which will be processed in the cutting step of the sheet 2.

The definition of the first portion 18 and/or the second portion 19 may obviously take place in sequentially reversed time periods depending on the needs of the user, who has available program functions which are independent of each other so as to be able to carry out this initial training of the control system 20.

In fact, the aforementioned selection means take the form of a program instruction which the user may select from a menu of the user interface 30 and may transmit to the control system 20 by means of the simple action of a tracking device associated with a user command, for example a mouse.

The setting step, in addition to the filtering step, may also comprise a preemptive alignment step carried out by the user, as will be discussed further below in greater detail.

The method also comprises a process step in which the images of a sheet to be cut are acquired by the matrix of cameras 10 and are made available to the control system 20 in an image format which can be readily processed.

It is pointed out that the setting step of the machine and the process step may occur at time intervals which are separated from each other (and may also be carried out by more than one machine), wherein this setting step can be performed also on a "one-off basis and these settings are stored in the memory of the machine and used in the process step.

Summing up, the method according to the present invention is characterized by the following setting steps:
- providing in the memory 21 at least one second reference image 16 representing a qualitative aspect of the surface 24 of the sheet 2 or of the portion 3 to be cut; the image 16 is then processed to create the filter that is applied subsequently, as specified in the following step;
- defining by means of selection, via the user interface 30 of the electronic control system 20, at least one first sample portion 18 and at least one second sample portion 19 of said at least one second reference image 16, thus obtaining a criterion for comparative classification of said sample portions 18 and 19 of the image 16,
and is also characterized by the following process steps:
- acquiring at least one image 12 of the sheet to be cut, by means of image detectors 10 associated with the machine 7;
- classifying pixels of the acquired image 12 of the sheet 2 to be cut, assigning to them a percentage value or weight based on said classification criterion, by means of an image processing unit of said electronic control system 20, thus obtaining a filtered image 28 based on said criterion;
- further processing the filtered image 28 and the reference image of the shape of the component to be cut, so as to define the processing path or point of a cutting area of the portion 3 of the sheet.

Essentially, the setting step of the method of the present invention involves the definition of at least one first sample portion 18 of the reference image 16 and at least one second sample portion 19 of the reference image 16, these sample portions 18 and 19 having a gradient which is mutually opposite in qualitative terms according to the judgment or interest of the user. Essentially, the two sample portions 18 and 19 are related to each other, for example from the point of view of the colour contrast or the surface appearance.

In other words, the sample portion 18 is a portion of no interest for the user while the sample portion 19 is a portion of high (maximum) interest for the user, and therefore their image content is opposite from a qualitative point of view, i.e. they represent opposite qualitative aspects (i.e. relating to the surface appearance) of the surface 24.

The filter of the present invention is therefore trained based on these opposite examples selected by the user, as specified in the following. For example, the first sample portion 18 is a part of a background which is of no interest for the user, while the second sample portion 19 is a part of an area which is of maximum interest for the user. The elaboration of these images thus results in a criterion suitable to identify which portions, in particular which pixels, of a subsequent acquired image could be of interest for the user.

According to an advantageous embodiment, the criterion for comparative classification of involves the implementation of an automatic learning procedure in said processing unit by using a neural network.

The images relating to the first portion 18 and second portion 19, as well as the criterion, are stored in the data memory 21, and a gradual learning application program, which again preferably operates according to an algorithm using a convolutional neural network, processes the digital image 12 of the sheet acquired by the cameras 10 and produces as a result a filtered image 28 in an intelligent manner, discriminating which parts of the starting digital image 12 are to be taken into consideration and which parts are to be ignored.

In other words, the neural network operating in the filtering algorithm separates the useful signal from the noise, which noise is represented by areas where the pixels do not have a sufficiently high weight classification so that these pixels are not classified as a useful signal according to the qualitative pre-selection of the user. In this way it is possible to distinguish between the image portions which are of real interest for the subsequent steps.

More particularly, the smart filter applied to the starting digital image 12 performs a conversion of all the pixels of the coloured image 12 and assigns to each pixel a colour category based on the extreme classification examples provided by the user, these extreme classification examples being represented by the first sample portion 18 and the second sample portion 19. In other words, a subdivision of the areas of the recorded digital image 12 is carried out and said image is thus filtered according to the extreme gradients defined by the user. The pixels that are considered of no interest, i.e. the ones more related to the sample portion 18, are therefore assigned a lower class, i.e. they are "switched off'. The colour class of each pixel is therefore associated to a particular interest of the user, as obtained by the elaboration of the image 16 via the machine learning technique.

This smart filter is preferably applied before an image search or matching algorithm is started, this search or matching algorithm being of the type to compare said images with a reference image of the shape to be cut out, which is stored in the memory 21.

For example, the material of the sheet 2 is a background that could be neutral or irrelevant compared to designs or images shown or drawn on the surface 24 or, on the contrary, it could be in colour contrast with them. In any case, the background could be misleading for the purposes of the alignment of the part or parts designed or applied on the sheet 2.

The smart filter is able to recognize all the pixels of the background before analysing the image for the search and the alignment of the pattern of the cutting profile. In other words, the filtering step acts by suppressing the pixels which are not relevant for the purposes of the subsequent identification step.

In other words, the method according to the present invention is based on a subtraction operating principle since it removes from the image the pixels which have been assigned a colour category below a predetermined level considered acceptable.

The initial step leading to the definition of at least one first sample portion 18 of the image 16 and one second sample portion 19 of the same image 16, which are mutually opposite in terms of qualitative aspects, is a training carried out on samples of surface appearance which are independent of the form of the reference shape used to define the profile of the area to be cut out.

For example, the initial step of definition and training is calibrated so as to recognize a predetermined type of fabric or a texture or a grain of a leather. Alternatively, the system is trained to recognize a stitching line or, by applying a dual or contrast analysis option, to search only stitching lines irrespective of the material; in this case, a same definition step may be used to recognize stitches on different materials and relating to various models.

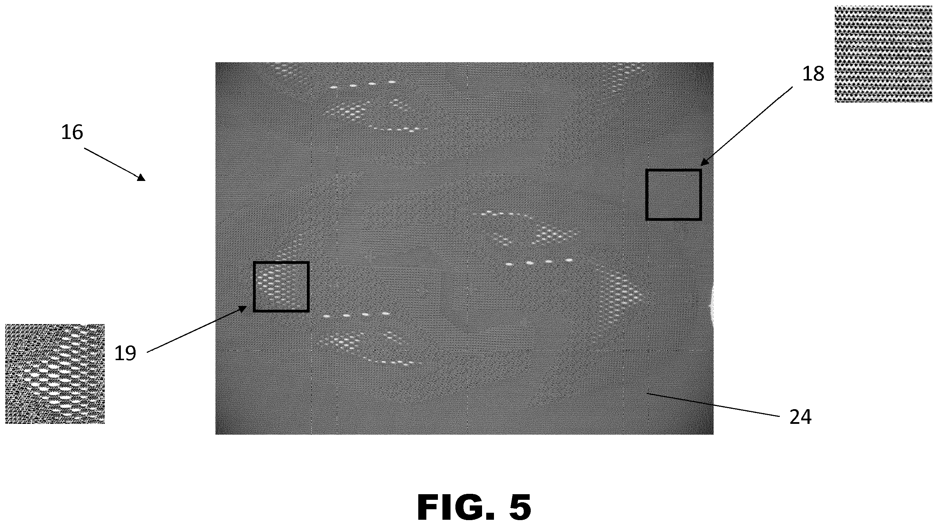

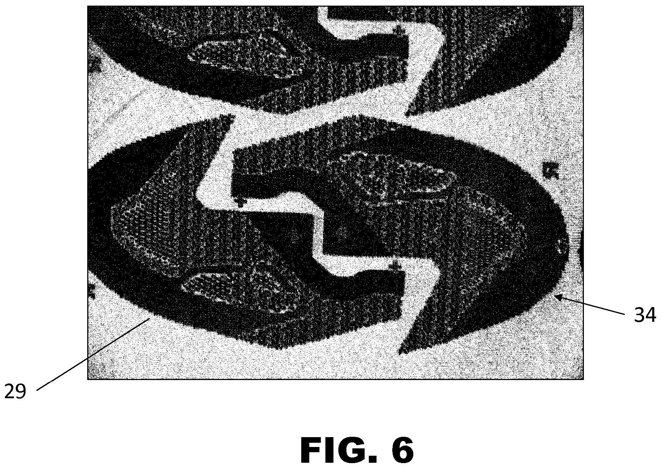

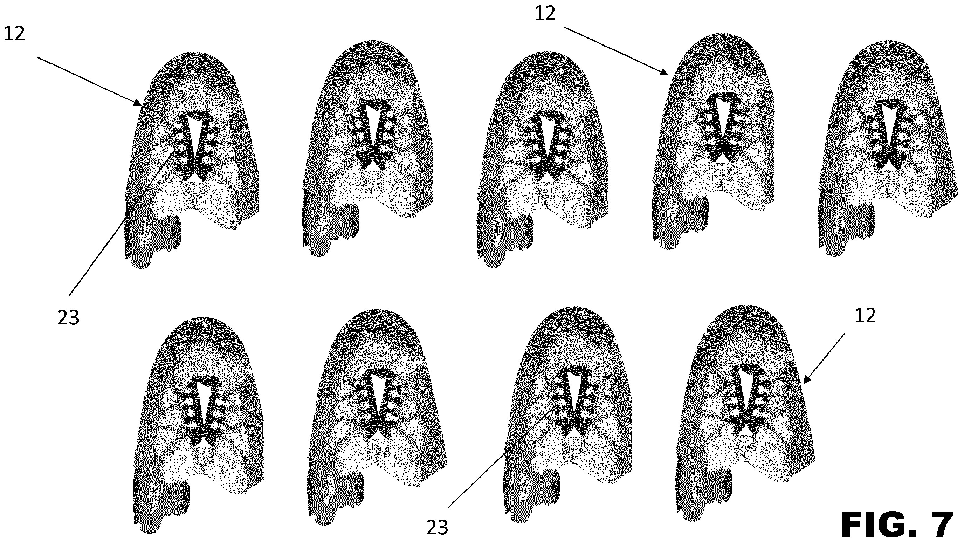

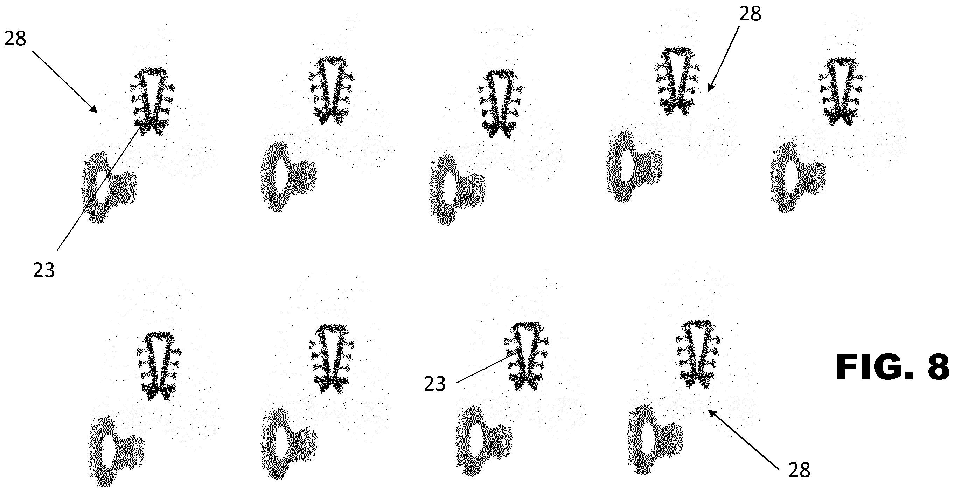

The initial step of definition and training therefore has a dual function:
A. highlighting certain areas in images having minimum differences and low colour contrast, for example different weaves formed with single-colour yarn, such as a white reinforcement applied to a white hide, as shown in Figures 5 and 6;
B. ignoring background designs which are clearly visible, but whose position is irrelevant for the purposes of the subsequent processing to be performed. In fact, areas which are even misleading for a correct alignment, although characterized by a good contrast, could even be present, as shown in Figures 7 and 8.

It is clear therefore that, conveniently according to the present invention, in this preliminary setting step, the filter is set independently of the type of sheets which are to be cut, this filter being set for example to recognize a type of material or more generally a given qualitative aspect of the sheet.

Furthermore, as mentioned above, the setting step comprises a preemptive alignment step wherein the user indicates beforehand the manner and position in which the processing of the sheet of material is to be carried out, namely he indicates the way of processing the acquired image to be carried out during the process step.

More specifically, in the prior alignment step included in the setting step, an image of the sheet to be processed is acquired and the operator, by means of the machine user interface, aligns the cutting path which is to be followed during the process step with respect to this image.

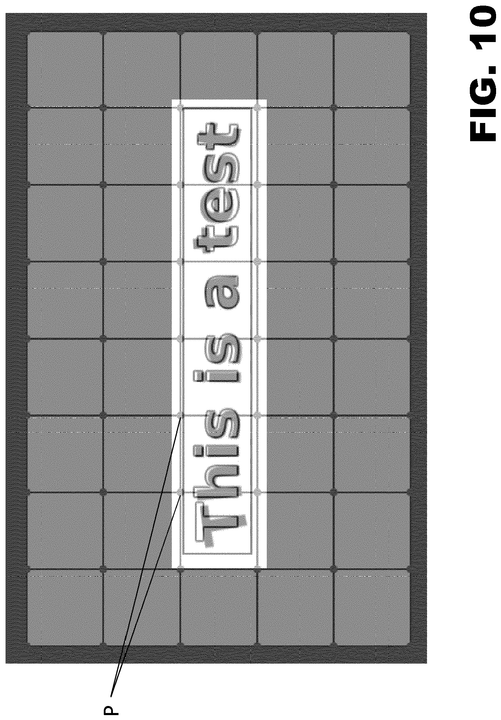

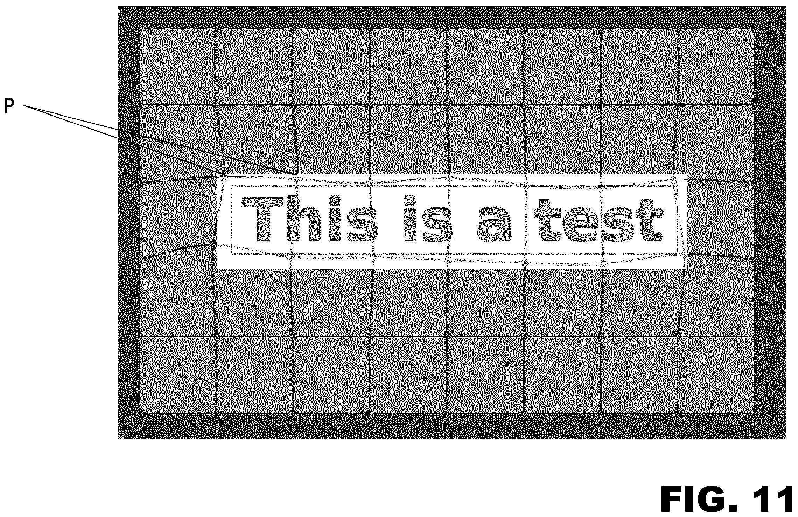

Figures 10 and 11 show a simple example of this prior alignment procedure. In particular, during this step, the parts to be cut of the acquired image (which are not perfectly aligned) are aligned with an "ideal" aligned and nondeformed image. This step is important in order to avoid a positional training on an already inaccurate model. Fig. 10 shows the ideal model superimposed on the acquired real image. Starting from this superimposition, it is possible to correct manually the alignment, for example by manually adjusting a grid of points P which can be configured as shown in Figure 11, where the image has been "straightened" so as to match the theoretical model. Therefore, during this manual step, the reference is given by the theoretical model with which the acquired image is compared.

In particular, this figure shows the simple message "THIS IS A TEST" which is to be regarded as an "ideal" reference image contained in the memory 21. In the ideal image, the writing appears straight.

The recording made by the cameras 10 instead produces an image 12 which is crooked because of the deformability of the material of the sheet 2. The operator of the machine 7, during this setting step, initially aligns a rectangular shaped cutting path around the writing in Figure 10, but in this case, he will encounter problems as regards precision. However, only the part showing the writing is of interest for processing purposes, and the procedure provides superimposing on the writing the polygonal grid 40 which may be formed by squares or triangles.

The operator, by using the application program executed in this alignment step, can first "straighten" (for example by means of roto-translation) the image 12 acquired by the cameras 10, and then he can perform the alignment.

This set-up alignment is done by positioning the theoretical cutting profile on top of the acquired digital image 12 which does not have, however, the theoretical form; therefore, the operator is able to deform (with a multi-point deformation such as that shown in Figure 11) the image of the real portion 3 so that it resumes its theoretical form. By doing so, the positioning of the cutting path will be very easy and precise.

This preliminary step therefore allows the alignment precision to be increased during the following process step.

This step involves a further outlining step, namely a step where a further classification of the important zones (which are to be matched as precisely as possible) is carried out. The parts which are not included will be ignored during the following process step and will be deformed as little as possible.

Finally, during this preliminary step, the image processing mode (i.e. the matching rule definition) of the subsequent process step is also defined, as it will be described in greater detail below.

The settings defined in the aforementioned steps are stored and are then used in the following process step described below, which is performed in a completely automated manner.

Advantageously, during this process step, a processing of the digital image or images 12 is performed, these images being subjected to a processing which involves filtering of parts of the image itself, in the ways indicated above.

The method according to the present invention then continues with an image search step which allows the definition of the design (or cutting area) of the portion 3 of the sheet 2 to be cut, which is filtered with respect to the background or other images present in the said design.

Once the reclassification of the pixels of the acquired image has been performed, the search for the reference images 32 of the portion 3 is performed, considering arbitrary positions and possible deformations due to the flexibility of the sheet 2.

A third step of the method according to the present invention involves a further treatment of the images in order to optimize and reduce to a minimum any presence of errors.

These errors are due to the arrangement of the material, as well as to its flexibility and deformability resulting in folds and/or stretching when the material is placed on the support 9 of the conveyor belt 8, as will be illustrated in detail further below.

According to the method of the present invention, after the step of search for the digital image 12 of the portion 3 to be trimmed, a search for the so-called "critical areas" 23 inside the image 12 is carried out.

This step is performed considering also relative displacements and deformations with respect to the reference images contained in the data memory 21 of the control system 20.

The critical areas 23 are not necessarily associated with designs or writing present on the sheet, but are instead areas of the image 12 which the control system, even after the filtering step, manages to distinguish in order to determine the alignment of these designs or writing, and represent image portions which are particularly important for the purposes of processing.

The method then provides a step of aligning the cutting area of the portion 3 with the reference image; even more preferably, the method provides the alignment of the critical areas of the cutting area with corresponding critical areas of the reference image.

The alignment of the cutting areas or of the critical areas 23 is based on an image similarity matching which does not look for specific geometrical forms, but defines an association or affinity coefficient obtained by scanning all the pixels of the acquired image and by comparing the value of these pixels of the acquired image with an expected value with respect to a predefined reference system. This evaluation is performed by means of an acceptance threshold x defined for example between 0 and 1 (0 < x < 1) and chosen by the user, wherein during scanning a value between 0 and 1 is attributed to each pixel depending on the degree of association with a position compared to the expected value. If this value is below the threshold x, the pixel is considered to be "unaligned", while if it is above the threshold x it is considered to be "aligned".

Unlike the prior art, which operates by comparing the recorded profiles with the stored profiles and calculates the differences and the tolerances between them, the method according to the present invention always looks for the optimum position of the pixels of a given critical area 23 and, minimizing also the error, decides whether to accept the final result on the basis of the threshold value x.

In order to minimize the error in alignment between the acquired image and the reference image due to the arrangement, a roto-translation of the corresponding images is performed.

However, it should also be considered that, owing to the way in which the portions 3 of the sheets 2 to be trimmed are often assembled, a simple global skew deformation, rotation, bending or translation may not be sufficient to obtain an acceptable result.

For example, the portion 3 to be trimmed may be obtained by assembling rigid parts with flexible parts, while the deformation to be applied to the cut should be more concentrated in the flexible parts.

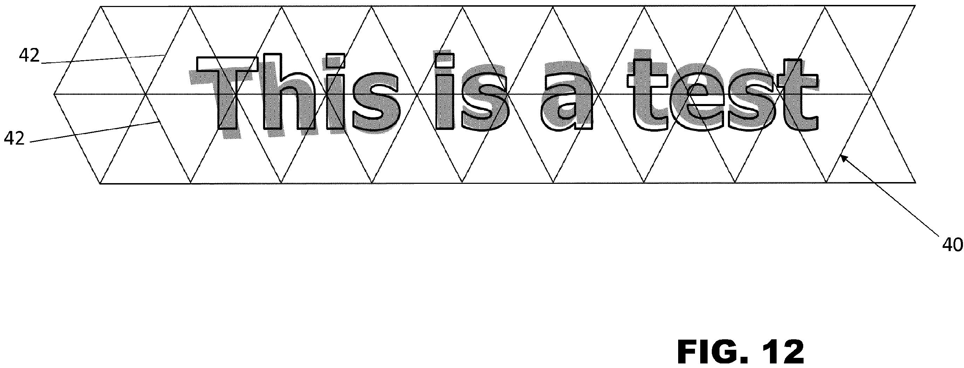

Conveniently according to the present invention, the control system allows identifying the "rigid" zones where the cutting paths in that portion may undergo only rotary-translation, and creates the final deformation which respects these constraints so as to modify as little as possible the remaining parts of the portion 3, based on a simulation of an elastic structure. Essentially the system adopts an approach which is as conservative as possible, as it will be clear in the following example of embodiment with reference in particular to the examples of Figures 12 to 16.

In particular, the method according to the present invention provides firstly a roto-translation in the superimposition of the images; in other words, the digital image 12 which has been acquired by the machine 7 is aligned as best as possible with the geometry of the reference image 32 contained in the memory.

As mentioned above, this rotary-translation is not always sufficient and, in some cases, it is necessary to deform also the cutting path in order to correct the deformation of the image. Advantageously, the invention provides that this deformation is calculated by means of an application program which involves a multi-point calculation procedure.

According to this procedure, a pattern 40, namely a polygonal grid formed by a plurality of adjacent polygons 42, for example triangles, is superimposed on the acquired digital image 12.

Basically, the idea at the basis of this procedure is that of cutting the sheet in a crooked manner such that, once the sheet has been cut and stretched, the writing appears straight again, thus rectifying the deformation. In this case, the cutting profile 29 appears crooked because the cut of the material of the sheet 2 allows the writing to be straightened again once the material is tensioned.

Basically, with this procedure, the natural deformation of the pliable and flexible sheet is used for the purpose of calculating the most correct cutting profile to be applied.

Obviously, this procedure is not suitable for materials that are rigid per se and where it is better to follow, as cutting profile 29, the cutting profile of the reference image 32 contained in the memory.

It should also be noted that the polygonal grid 40 is deformed by the smallest amount possible. In particular, the vertices of the polygons which form the grid 40 are calculated by comparing the pixels of the acquired image with those of the reference image 32. Conveniently, the present invention allows a local deformation to be performed only where there is really the need, while the remaining parts of the image (for example in the region of polygons situated far from the area of interest) are deformed as little as possible.

The more the information obtained during the acquisition step the more precise will be the calculation of the deformation.

In order to understand this concept more clearly, reference may be made to a fabric with lines or squares. If, during the acquisition step, these lines or squares can be clearly identified and an optimum alignment with the reference image can be performed, no deformation is necessary; on the other hand, if the information obtained in the acquisition step is not satisfactory in quantitative terms, then it is better to apply a deviation while attempting to perform the least possible deformation.

The calculation algorithm applies the information received from the user who has previously distinguished the critical areas from the areas which may be regarded as rigid and not subject to deformation of the material.

The algorithm first attempts to obtain the best chromatic approximation for all the pixels and, as shown in Figure 10, finds variations due to the deformation of the material which in the figure is represented by the shaded area of the writing.

At this point a rotary-translation is applied so as to allow superimposition of most of the pixels. It is thus possible to find the best roto-translation allowing the definition of the information obtained by means of acquisition of the digital image 12.

The polygonal grid 40 is now applied and allows the further displacement of the vertices of the adjacent polygons 42 to be determined so as to obtain the best superimposition, which depends on the deformation and the type of material. In other words, a local deformation is applied to each vertex.

Actually, the polygons which are deformed as a whole are obliged to be deformed by the migration of vertices in common with an adjacent polygon and are pulled along during deformation. This is done while attempting to perform a deformation as little as possible.

In other words, by means of the roto-translation, the cutting path is first displaced so that it is positioned correctly in relation to the portion 3 which is to be cut and then, if appropriate, the deformation is automatically performed. Finally, it is also possible to perform this deformation rectification procedure without performing first a roto-translation of the coordinates, even though generally it is preferable to perform first a roto-translation.

This deformation rectification step may be activated or deactivated depending on the requirements and the applications. If activated, it is performed automatically.

To summarize, during the process step, a simple scan of the entire work surface is performed in order to identify the cutting areas or the critical areas by trying to find matches with all the selected models (they can be more than one). The parts are recognized by considering the minimization of the sum of the squares of the errors between corresponding pixels of the zones of interest in the images which may have been pre-processed by the smart filter.

If matches are found, a first alignment (roto-translation) of the reference image and the image recorded by the cameras is performed.

If required, the system calculates the modifications which must be made to the processing operations in order to rectify the deformations (the so-called "morphing") as mentioned above.

In any case, this alignment and deformation rectification step takes place in a completely automatic manner.

Finally, the cutting heads work the cutting areas (e.g. by applying cuts, holes, markings, etc.) and finally the conveyor belt is moved so as to allow the processing of successive sheet portions.

As mentioned above, the aforementioned image processing modes are performed automatically, but are defined in the preliminary setting step.

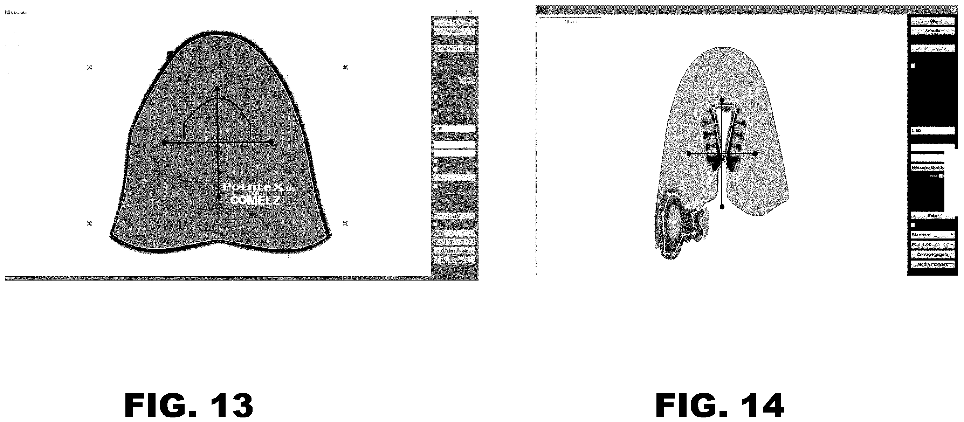

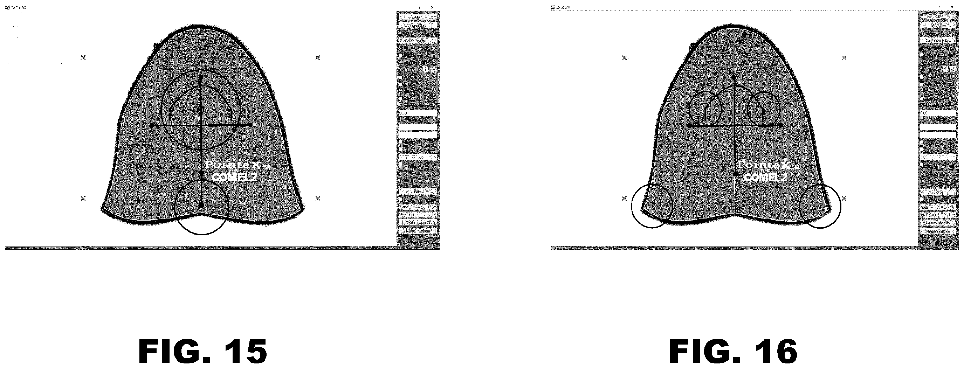

In other words, already during the setting step, matching rules are defined where it is decided whether to perform, in the following process step, the roto-translation, wherein this decision takes into account:
- general average of the outlined image (Fig. 13)
- centre-angle positioning (Fig. 15)
- averaged alignment of specific zones of interest (Fig. 16)
or whether the part must be cut with rectification of the deformation (Fig. 14).

In particular, Figures 13 and 14 show respective schematic views of images presented to the user of the equipment 1 during the setting step of each model of portion 3 of the sheet 2 to be cut. In particular, the images show a desired cutting profile apt to allow a deformation of the cutting path.

Figure 13 shows an example of total deformation, namely a deformation which is admissible over the entire area of the model.

Figure 14 shows instead an example of deformation of only certain zones, while a conservative criterion of the "arap" ("as rigid as possible") type is applied to the other zones.

Alternatively, Figures 15 and 16 show respective schematic views of images presented to the user of the equipment 1 during the setting step in the case no deformation of the cutting path is applied.

In Figure 15 a simple roto-translation with centre and angle is applied.

In Figure 16 a roto-translation with minimization of the errors in certain key areas is applied; for example, the areas may various have forms and dimensions that can be selected, such as the four circles shown.

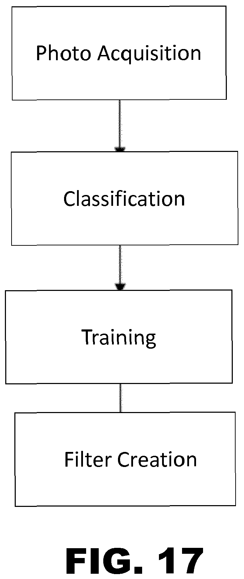

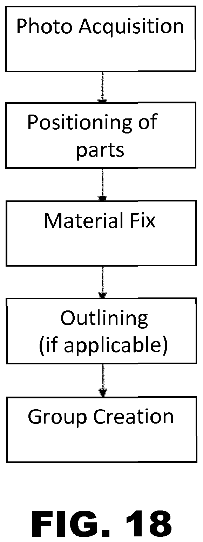

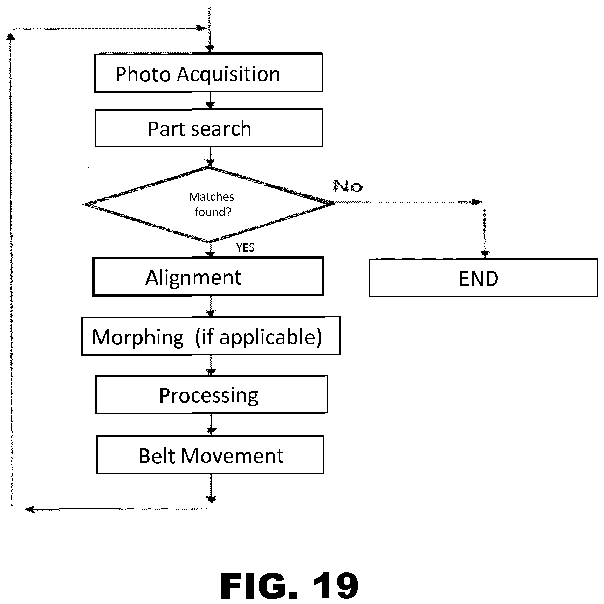

Finally, by way of summary, Figures 17-19 are flow diagrams which show successive steps of the method; in particular Figure 17 shows the definition of the filter to be applied to the images, Figure 18 shows the preemptive alignment and the definition of the image processing modes, and Figure 19 shows the process step, in which the settings according to Figures 17 and 18 are applied.

The invention solves the technical problem and offers the major advantage that it allows the processing, for cutting or trimming purposes, of materials in the form of sheets which are highly engineered both in terms of their intrinsic structure and in terms of the surface treatment previously carried out on them. In fact, without filtering of the acquired images, it would not be possible to define a precise cutting path.

Moreover, it is pointed out that the present invention may be equally well applied both to single shoe uppers (as well as more generally to cutting areas) which are to be finished, and to sheets comprising a plurality of shoe uppers, with the same cutting precision being applied in both cases.

Finally, it is pointed out that the possibility of rectifying the deformations in a selective manner allows the precise cutting of complex semi-finished articles, comprising rigid parts and less rigid parts.

## Claims

1. A method for automatically cutting sheets (2) of pliable material, for example for shoe, leather, clothing components and the like, of the type wherein a numerical control machine (7), provided with an electronic control system (20) having a memory (21) comprising at least one reference image (32) of the shape of the component to be cut, is designed to receive at its inlet (5) material in the form of sheets (2) so as to define on said sheets (2) a processing path or point (29) and to transfer cut portions (3) to its outlet (13),
said method comprising a setting step including:
- storing in said memory (21) at least one second reference image (16) of the surface (24) of the sheet (2) or of the portion (3) to be cut;
- defining by means of selection, via a user interface (30) of the electronic control system (20), at least one first sample portion (18) and at least one second sample portion (19) of said at least one second reference image (16), said sample portions (18) and (19) being opposite classification examples relating to a respective qualitative aspect of the surface (24) of the sheet (2); and
- obtaining a classification criterion based on said opposite classification examples provided by the first sample portion (18) and the second sample portion (19) of the image (16);
said method comprising a process step including:
- acquiring at least one image (12) of the sheet (2) to be cut, by means of image detectors (10) associated with the machine (7);
- classifying pixels of the acquired image (12) of the sheet (2) to be cut by assigning thereto a percentage value or weight according to said classification criterion, by means of an image processing unit of said electronic control system (20), obtaining a filtered image (28) based on said criterion,
wherein assigning to the pixels of the acquired image (12) a percentage value or weight for obtaining a filtered image comprises assigning to each of said pixels of said acquired image (12) a colour category; and
- further processing said filtered image (28) and the reference image of the shape of the component to be cut, so as to define the processing path or point (29) of a cutting area of the portion (3) of the sheet (2),
wherein the definition of the processing path or point (29) of the cutting area during said process step involves a comparison between said acquired image (12) and the reference image (32) of the shape of the portion (3) to be cut, in order to establish and check the alignment degree of said cutting area with said reference image of the shape.

2. The method according to claim 1, **characterized in that** said classification criterion of said setting step involves the implementation of an automatic learning procedure in said processing unit by using a neural network.

3. The method according to claim 1 or 2, **characterized in that** the filtering step is applied also to the so-called first cut which is carried out on a sheet (2) of a material wound in the form of rolls (4).

4. The method according to any one of the preceding claims, wherein said classification step comprises highlighting areas having minimum relative differences and/or highlighting low contrast areas, and/or comprises ignoring image portions whose position is irrelevant for the subsequent processing.

5. The method according to any one of the preceding claims, comprising a step of identifying critical areas (23) of said cutting area (34) of said image (12), said step of checking the alignment of the cutting path (29) comprising a step of aligning said critical areas (23) with corresponding critical areas in said reference image (32) of the shape by means of a roto-translation of the respective reference coordinates.

6. The method according to claim 5, wherein said step of establishing said alignment degree comprises a step of comparing the value of the pixels of the acquired image (12) with an expected value thereof with respect to a predefined reference system by assigning to each pixel an association value, and a step of checking whether said association value is above or below an acceptance threshold value (x).

7. The method according to claims 5 and 6, wherein said roto-translation is performed by minimizing said relative difference between the values of said pixels, said minimization being performed globally on all the pixels or only on specific portions of the image.

8. The method according to any one of the preceding claims, wherein said process step comprises a step of rectifying deformations of the cutting area (34) by means of fine adjustment of said cutting processing path or point (29), said fine adjustment being performed by dividing said cutting area (34) into a predefined pattern and locally rectifying in a selective manner portions of said pattern (40), while adjusting the remaining portions of said pattern as little as possible, so as not to deform sheet portions which do not require rectification.

9. The method according to claim 8, wherein said predefined pattern (40) is a polygonal grid comprising a plurality of adjacent polygons (42).

10. The method according to any one of the preceding claims, wherein said setting step includes a further step of manual preemptive alignment, wherein the user manually aligns cutting areas with an ideal reference image.

11. The method according to any one of the preceding claims, wherein said reference image (32) of the shape corresponds to said second reference image (16).

12. The method according to any one of the preceding claims, wherein said cutting areas correspond to shoe uppers or leather components.

13. The method according to claim 1, **characterized in that** said setting and process steps are not temporally related to each other.

14. A system for automatically cutting sheets (2) of pliable material, for example for shoe, leather, clothing components and the like, of the type wherein a numerical control machine (7), provided with an electronic control system (20) having a memory (21) comprising at least one reference image of the shape of the component to be cut, is designed to receive at its inlet (5) material in the form of sheets (2) so as to define on said sheets (2) a processing path and to transfer cut portions (3) to its outlet (13), **characterized in that** it is adapted to carry out the steps of the method according to any one of the preceding claims.

15. The system according to claim 14, wherein said system comprises a grid having fifteen cameras.

16. A computer program product for controlling a numerical control machine (7) for automatically cutting sheets (2) of pliable material, said computer program product comprising code portions adapted to control the machine according to the method according to any one of claims 1 to 13.

## Patentansprüche

1. Verfahren zum automatischen Zuschneiden von Bahnen (2) aus biegsamen Material zum Beispiel für Schuhe, Leder, Kleidungskomponenten und dergleichen des Typs, bei dem eine Maschine (7) mit numerischer Steuerung, die mit einem elektronischen Steuersystem (20) versehen ist, das einen Speicher (21) aufweist, der mindestens ein Bezugsbild (32) der Gestalt der zuzuschneidenden Komponente enthält, so entworfen ist, dass es an seinem Einlass (5) Material in der Form von Bahnen (2) aufnimmt, um auf den Bahnen (2) einen Verarbeitungsweg oder -punkt (29) zu definieren und zugeschnittene Abschnitte (3) zu seinem Auslass (13) umzuladen,
wobei das Verfahren einen Einstellschritt umfasst, der Folgendes umfasst:
- Speichern eines zweiten Bezugsbildes (16) der Oberfläche (24) der Bahn (2) und/oder des zuzuschneidenden Abschnitts (3) in dem Speicher (21);
- Definieren mindestens eines ersten Probenabschnitts (18) und mindestens eines zweiten Probenabschnitts (19) des mindestens einen zweiten Bezugsbildes (16) mittels Auswahl durch eine Anwenderschnittstelle (30) des elektronischen Steuersystems (20), wobei die Probenabschnitte (18) und (19) entgegengesetzte Klassifizierungsbeispiele sind, die sich auf einen jeweiligen qualitativen Aspekt der Oberfläche (24) der Bahn (2) beziehen, und
- Erhalten eines Klassifizierungskriteriums auf der Grundlage der entgegengesetzten Klassifizierungsbeispiele, die durch den ersten Probenabschnitt (18) und den zweiten Probenabschnitt (19) des Bildes (16) bereitgestellt sind;
wobei das Verfahren einen Verarbeitungsschritt umfasst, der Folgendes umfasst:
- Erfassen mindestens eines Bildes (12) der zuzuschneidenden Bahn (2) mittels Bilddetektoren (10), die der Maschine (7) zugeordnet sind;
- Klassifizieren von Pixeln des erfassten Bildes (12) der zuzuschneidenden Bahn (2), indem ihnen mittels einer Bildverarbeitungseinheit des elektronischen Steuersystems (20) ein Prozentwert oder Gewicht gemäß dem Klassifizierungskriterium zugewiesen wird, wobei auf der Grundlage des Kriteriums ein gefiltertes Bild (28) erhalten wird,
wobei das Zuweisen eines Prozentwerts oder Gewichts an die Pixel des erfassten Bildes (12) zum Erhalten eines gefilterten Bildes das Zuweisen einer Farbkategorie an jedes Pixel des erfassten Bildes (12) umfasst, und
- weiteres Verarbeiten des gefilterten Bildes (28) und des Bezugsbildes der Gestalt der zuzuschneidenden Komponente, um den Verarbeitungsweg oder -punkt (29) einer Schnittfläche des Abschnitts (3) der Bahn (2) zu definieren,
wobei die Definition des Verarbeitungswegs oder -punktes (29) der Schnittfläche während des Verarbeitungsschritts einen Vergleich zwischen dem erfassten Bild (12) und dem Bezugsbild (32) der Gestalt des zuzuschneidenden Abschnitts (3) beinhaltet, um den Ausrichtungsgrad der Schnittfläche auf das Bezugsbild der Gestalt einzurichten und zu überprüfen.

2. Verfahren nach Anspruch 1, **dadurch gekennzeichnet, dass** das Klassifizierungskriterium des Einstellschritts das Implementieren einer automatischen Lernprozedur in der Verarbeitungseinheit durch Verwenden eines neuronalen Netzes beinhaltet.

3. Verfahren nach Anspruch 1 oder 2, **dadurch gekennzeichnet, dass** der Filterschritt auch auf den sogenannten ersten Schnitt angewendet wird, der auf einer Bahn (2) aus einem Material ausgeführt wird, das in Form von Rollen (4) gewickelt ist.

4. Verfahren nach einem der vorhergehenden Ansprüche, wobei der Klassifizierungsschritt das Hervorheben von Flächen, die minimale relative Unterschiede aufweisen, und/oder das Hervorheben von Flächen mit niedrigem Kontrast umfasst und/oder das Übergehen von Bildabschnitten umfasst, deren Position für die anschließende Verarbeitung irrelevant ist.

5. Verfahren nach einem der vorhergehenden Ansprüche, das einen Schritt zum Identifizieren von kritischen Flächen (23) der Schnittfläche (34) des Bildes (12) umfasst, wobei der Schritt des Überprüfens der Ausrichtung des Schnittwegs (29) einen Schritt zum Ausrichten der kritischen Flächen (23) auf entsprechende kritische Flächen in dem Bezugsbild (32) der Gestalt mittels einer Roto-Translation der entsprechenden Bezugskoordinaten umfasst.

6. Verfahren nach Anspruch 5, wobei der Schritt zum Einrichten des Ausrichtungsgrads einen Schritt zum Vergleichen des Werts der Pixel des erfassten Bildes (12) mit einem dafür erwarteten Wert in Bezug auf ein im Voraus definiertes Bezugssystem durch Zuweisen eines Zuordnungswerts an jedes Pixel und einen Schritt zum Überprüfen, ob der Zuordnungswert über oder unter einem Annahmeschwellenwert (x) liegt, umfasst.

7. Verfahren nach Anspruch 5 und 6, wobei die Roto-Translation durchgeführt wird, indem die relativen Differenzen zwischen den Werten der Pixel minimiert werden, wobei die Minimierung global auf allen Pixeln oder nur auf spezifischen Abschnitten des Bildes durchgeführt wird.

8. Verfahren nach einem der vorhergehenden Ansprüche, wobei der Verarbeitungsschritt einen Schritt zum Entzerren von Verformungen der Schnittfläche (34) mittels Feineinstellung des Schnittverarbeitungswegs oder -punktes (29) umfasst, wobei die Feineinstellung durch Teilen der Schnittfläche (34) in ein im Voraus definiertes Muster und lokales Entzerren von Abschnitten des Musters (40) auf eine selektive Weise durchgeführt wird, während die verbleibenden Abschnitte des Musters so wenig wie möglich eingestellt werden, um Bahnabschnitte, die keine Entzerrung erfordern, nicht zu verformen.

9. Verfahren nach Anspruch 8, wobei das im Voraus definierte Muster (40) ein vieleckiges Raster ist, das mehrere benachbarte Vielecke (42) umfasst.

10. Verfahren nach einem der vorhergehenden Ansprüche, wobei der Einstellschritt einen weiteren Schritt einer manuellen vorbeugenden Ausrichtung enthält, wobei der Anwender Schnittflächen manuell auf ein ideales Bezugsbild ausrichtet.

11. Verfahren nach einem der vorhergehenden Ansprüche, wobei das Bezugsbild (32) der Gestalt dem zweiten Bezugsbild (16) entspricht.

12. Verfahren nach einem der vorhergehenden Ansprüche, wobei die Schnittflächen Schuhschäften oder Lederkomponenten entsprechen.

13. Verfahren nach Anspruch 1, **dadurch gekennzeichnet, dass** der Einstell- und der Verarbeitungsschritt zeitlich nicht aufeinander bezogen sind.

14. System zum automatischen Zuschneiden von Bahnen (2) aus biegsamen Material zum Beispiel für Schuhe, Leder, Kleidungskomponenten und dergleichen des Typs, bei dem eine Maschine (7) mit numerischer Steuerung, die mit einem elektronischen Steuersystem (20) versehen ist, das einen Speicher (21) aufweist, der mindestens ein Bezugsbild der Gestalt der zuzuschneidenden Komponente enthält, so entworfen ist, dass es an seinem Einlass (5) Material in der Form von Bahnen (2) aufnimmt, um auf den Bahnen (2) einen Verarbeitungsweg zu definieren und zugeschnittene Abschnitte (3) zu seinem Auslass (13) umzuladen, **dadurch gekennzeichnet, dass** es dafür ausgelegt ist, die Schritte des Verfahrens nach einem der vorhergehenden Ansprüche auszuführen.

15. System nach Anspruch 14, wobei das System ein Raster umfasst, das fünfzehn Kameras aufweist.

16. Computerprogrammprodukt zum Steuern einer Maschine (7) mit numerischer Steuerung zum automatischen Zuschneiden von Bahnen (2) eines biegsamen Materials, wobei das Computerprogrammprodukt Codeabschnitte umfasst, die dafür ausgelegt sind, die Maschine gemäß dem Verfahren nach einem der Ansprüche 1 bis 13 zu steuern.

## Revendications

1. Procédé pour la découpe automatique de feuilles (2) de matériau pliable, par exemple pour chaussures, cuirs, composants de vêtements et similaires, du type dans lequel une machine à commande numérique (7), munie d'un système de commande électronique (20) ayant une mémoire (21) comprenant au moins une image de référence (32) de la forme du composant à découper, est conçue pour recevoir au niveau de son entrée (5) un matériau sous la forme de feuilles (2) de manière à définir sur lesdites feuilles (2) un chemin ou point de traitement (29) et à transférer des portions découpées (3) vers sa sortie (13), ledit procédé comprenant une étape de paramétrage comportant :
- le stockage dans ladite mémoire (21) d'au moins une seconde image de référence (16) de la surface (24) de la feuille (2) ou de la portion (3) à découper,
- la définition au moyen d'une sélection, via une interface utilisateur (30) du système de commande électronique (20), d'au moins une première portion d'échantillon (18) et d'au moins une seconde portion d'échantillon (19) de ladite au moins une seconde image de référence (16), lesdites portions d'échantillon (18) et (19) étant des exemples de classification opposée relatifs à un aspect qualitatif respectif de la surface (24) de la feuille (2) et
- l'obtention d'un critère de classification sur la base desdits exemples de classification opposée fournis par la première portion d'échantillon (18) et la seconde portion d'échantillon (19) de l'image (16),
ledit procédé comprenant une étape de procédé comportant :
- l'acquisition d'au moins une image (12) de la feuille (2) à découper, au moyen de détecteurs d'image (10) associés à la machine (7),
- la classification de pixels de l'image acquise (12) de la feuille (2) à découper en leur attribuant une valeur de pourcentage ou une pondération en fonction dudit critère de classification, au moyen d'une unité de traitement d'image dudit système de commande électronique (20), en obtenant une image filtrée (28) sur la base dudit critère,
dans lequel l'attribution aux pixels de l'image acquise (12) d'une valeur de pourcentage ou d'une pondération pour obtenir une image filtrée comprend l'attribution à chacun desdits pixels de ladite image acquise (12) d'une catégorie de couleur et
- le traitement ultérieur de ladite image filtrée (28) et de l'image de référence de la forme du composant à découper, de manière à définir le chemin ou point de traitement (29) d'une zone de découpe de la portion (3) de la feuille (2),
dans lequel la définition du chemin ou point de traitement (29) de la zone de découpe pendant ladite étape de traitement implique une comparaison entre ladite image acquise (12) et l'image de référence (32) de la forme de la portion (3) à découper, afin d'établir et de vérifier le degré d'alignement de ladite zone de découpe avec ladite image de référence de la forme.

2. Procédé selon la revendication 1, **caractérisé en ce que** ledit critère de classification de ladite étape de paramétrage implique la mise en œuvre d'une procédure d'apprentissage automatique dans ladite unité de traitement en utilisant un réseau neuronal.

3. Procédé selon la revendication 1 ou 2, **caractérisé en ce que** l'étape de filtrage est appliquée également à ce qu'on appelle la première découpe qui est réalisée sur une feuille (2) d'un matériau enroulé sous forme de rouleaux (4).

4. Procédé selon l'une quelconque des revendications précédentes, dans lequel ladite étape de classification comprend la mise en évidence de zones ayant des différences relatives minimales et/ou la mise en évidence de zones à faible contraste, et/ou comprend le fait d'ignorer des portions d'image dont une position n'est pas pertinente pour le traitement ultérieur.

5. Procédé selon l'une quelconque des revendications précédentes, comprenant une étape d'identification de zones critiques (23) de ladite zone de découpe (34) de ladite image (12), ladite étape de vérification de l'alignement du chemin de découpe (29) comprenant une étape d'alignement desdites zones critiques (23) avec des zones critiques correspondantes dans ladite image de référence (32) de la forme au moyen d'une roto-translation des coordonnées de référence respectives.

6. Procédé selon la revendication 5, dans lequel ladite étape d'établissement dudit degré d'alignement comprend une étape de comparaison de la valeur des pixels de l'image acquise (12) avec une valeur attendue de celle-ci par rapport à un système de référence prédéfini en attribuant à chaque pixel une valeur d'association, et une étape de vérification si ladite valeur d'association est supérieure ou inférieure à une valeur de seuil d'acceptation (x).

7. Procédé selon les revendications 5 et 6, dans lequel ladite roto-translation est effectuée en minimisant ladite différence relative entre les valeurs desdits pixels, ladite minimisation étant effectuée globalement sur tous les pixels ou uniquement sur des portions spécifiques de l'image.

8. Procédé selon l'une quelconque des revendications précédentes, dans lequel ladite étape de traitement comprend une étape de rectification de déformations de la zone de découpe (34) au moyen d'un ajustement précis dudit chemin ou point de traitement de découpe (29), ledit ajustement précis étant effectué en divisant ladite zone de découpe (34) en un motif prédéfini et en rectifiant localement d'une manière sélective des portions dudit motif (40), tout en ajustant le moins possible les portions restantes dudit motif, afin de ne pas déformer des portions de feuille qui ne nécessitent pas une rectification.

9. Procédé selon la revendication 8, dans lequel ledit motif prédéfini (40) est une grille polygonale comprenant une pluralité de polygones adjacents (42).

10. Procédé selon l'une quelconque des revendications précédentes, dans lequel ladite étape de paramétrage comporte une étape supplémentaire d'alignement manuel anticipé, dans lequel l'utilisateur aligne manuellement des zones de découpe avec une image de référence idéale.

11. Procédé selon l'une quelconque des revendications précédentes, dans lequel ladite image de référence (32) de la forme correspond à ladite seconde image de référence (16).

12. Procédé selon l'une quelconque des revendications précédentes, dans lequel lesdites zones de découpe correspondent à des empeignes de chaussure ou des composants en cuir.

13. Procédé selon la revendication 1, **caractérisé en ce que** lesdites étapes de paramétrage et de traitement ne sont pas temporellement liées l'une à l'autre.

14. Système pour la découpe automatique de feuilles (2) de matériau pliable, par exemple pour chaussures, cuirs, composants de vêtements et similaires, du type dans lequel une machine à commande numérique (7), munie d'un système de commande électronique (20) ayant une mémoire (21) comprenant au moins une image de référence de la forme du composant à découper, est conçue pour recevoir au niveau de son entrée (5) un matériau sous la forme de feuilles (2) de manière à définir sur lesdites feuilles (2) un chemin de traitement et à transférer des portions découpées (3) vers sa sortie (13), **caractérisé en ce qu'**il est adapté pour réaliser les étapes du procédé selon l'une quelconque des revendications précédentes.

15. Système selon la revendication 14, dans lequel ledit système comprend une grille ayant quinze dispositifs de prise de vue.

16. Produit de programme informatique pour commander une machine à commande numérique (7) pour la découpe automatique de feuilles (2) de matériau pliable, ledit produit de programme informatique comprenant des portions de code adaptées pour commander la machine conformément au procédé selon l'une quelconque des revendications 1 à 13.
